# EUROPEAN PATENT SPECIFICATION

(11) **EP 1 165 204 B1**
(45) Date of publication and mention of the grant of the patent: **25.06.2003**
(21) Application number: 00923152.3
(22) Date of filing: 07.04.2000
(51) Int. Cl.: B01D 27/10, B01D 27/14

(54) **DUAL-FLOW FILTER ASSEMBLY WITH IMPROVED CENTER-TUBE SEALING GROMMET**
ZWEISTROMFILTER MIT EINER VERBESSERTEN DICHTUNGSBUCHSE
ENSEMBLE FILTRE A DOUBLE FLUX AVEC ANNEAU D'ETANCHEITE A TUBE CENTRAL

(30) Priority: 07.04.1999 US 295457
(43) Date of publication of application: 02.01.2002
(73) Proprietor: AlliedSignal Inc., Morristown, New Jersey 07962-2245 (US)
(72) Inventor: LANGSDORG, Brian, Torrance, CA 90505 (US); DANOWSKI, Dan, Loveland, CO 80537 (US)
(74) Representative: Hucker, Charlotte Jane
(86) International application number: US0009234
(87) International publication number: WO00059603

(56) References cited:
- EP-A- 0 487 231
- DE-A- 19 752 376
- DE-U- 9 113 019
- US-A- 5 312 546
- US-A- 5 447 627
- US-A- 5 766 463

## Description

### BACKGROUND OF THE INVENTION

### 1. Technical Field

The present invention relates to dual-flow filter assemblies having a center tube sealing grommet and more specifically to an improved center-tube sealing grommet having lands for securing one or more filter elements to the grommet to improve the assembly characteristics of the filter assembly.

### 2. Discussion

Dual-flow filters having center-tube sealing grommets are known in the art and are disclosed in U.S. Patent No. 5,447,627 by Loafman et al. While the center-tube sealing grommet represents a significant advance in dual-flow filter technology, several problems have been noted.

The prior art dual-flow filter assemblies are typically designed such that the center-tube sealing grommet is press-fit into one or both of the filter elements. This design ensures the isolation of the fluid streams and provides a limited measure of stability for the filter elements during the assembly process. However, due to tolerance variations between the several components, the presence of mold releases on the grommet, or the presence of lubricants or rust preventatives on the filter elements, the natural elasticity of the grommet can tend to push the grommet out of the filter element while the filter assembly is being manufactured. This reduces the overall stability of the filter elements. If the stability of the filter elements is sufficiently diminished, the axis of the filter elements will become skewed to the axis of the filter assembly. Components placed on top of the skewed filter elements will be misaligned, thus impairing the assembly of the filter and/or creating a breach that would allow the different fluid streams to commingle.

Additionally, because the prior art press-fit assembly technique secures the filters to the grommet in a relatively weak manner, filter elements must be installed directly into the filter housing. The filter elements cannot be preassembled to the grommet. As such, each assembly line that produces the prior art dual-flow filter assemblies must have specific stations and dedicated equipment for loading each of the filter elements and installing the grommet. Naturally a design which permits the subassembly of the filter elements to the grommet prior to their installation into the filter housing would allow better utilization of capital equipment and improve the through-put of the assembly line by reducing the number of assembly stations.

Consequently, there is a need in the art for an improved center-tube grommet which locks onto the respective filter elements, thereby increasing the stability of the filter elements to maintain the alignment of the axis of the filter elements. This improves the processing of the filter at subsequent assembly stations and provides alternative methods of assembling the filter elements onto the grommet to improve the utilization of capital equipment, thus improving the assembly line throughput.

### SUMMARY OF THE INVENTION

It is a general object of the present invention to provide an improved center-tube sealing grommet which locks onto the respective filter elements.

It is a further object of the present invention to provide an improved center-tube sealing grommet which utilizes fillets to facilitate the installation of grommet into the filter elements.

The present invention is directed to an improved center-tube sealing grommet which overcomes the drawbacks of the prior known devices. The grommet of the present invention includes annular lands which provides additional support to the filter elements located between the land and a sealing flange. Fillets are incorporated into the grommet at the intersection between the grommet body and the annular lands. Positioning the fillets in this manner facilitates the installation of the grommet into the filter elements. The annular lands lock onto their respective filter element, providing a more rigid assembly that allows the filter element to be preassembled to the grommet prior to their installation into the filter housing. The improved center-tube sealing grommet provides increased stability which allows the axis of the filter elements to be maintained to the axis of the filter housing during the assembly of the dual-flow filter assembly, thereby reducing assembly defects.

Additional advantages and features of the present invention will become apparent from the subsequent description and the appended claims, taken in conjunction with the accompanying drawings.

### BRIEF DESCRIPTION OF THE DRAWINGS

Figure 1 is a sectional view of an exemplary dual-flow "spin-on" type filter assembly constructed in accordance with the preferred embodiment of the present invention.
Figure 2 is an enlarged view of the improved center-tube sealing grommet shown in Figure 1.
Figure 3 is an enlarged view of the lands and sealing flange shown in Figure 1.

### DETAILED DESCRIPTION OF THE PREFERRED EMBODIMENT

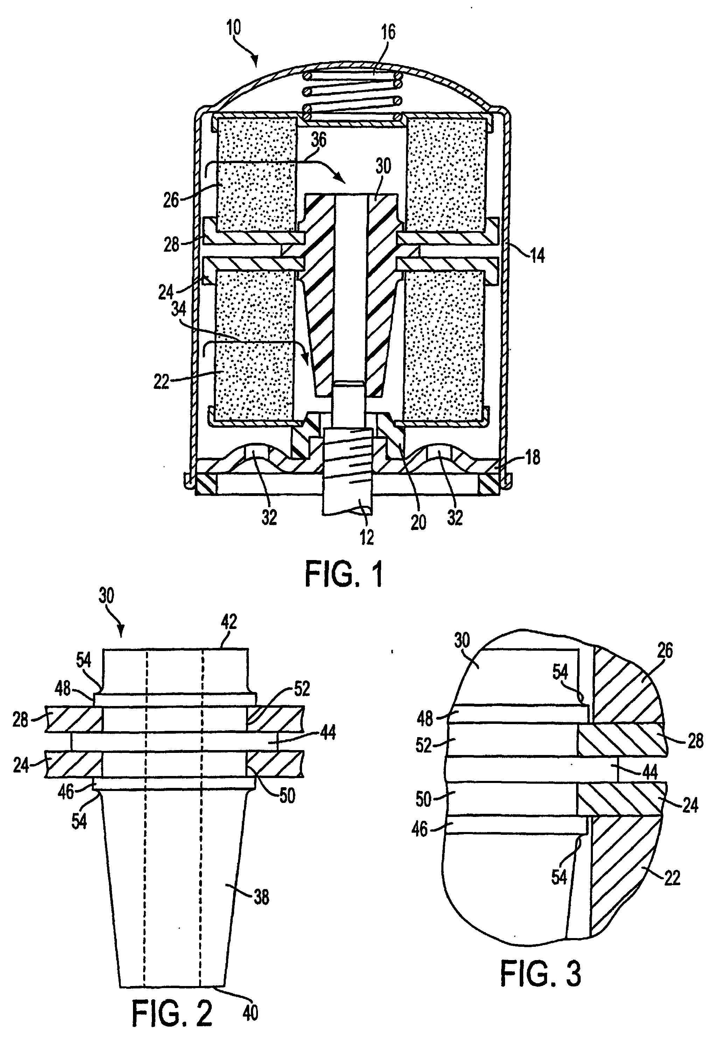

Figure 1 shows an exemplary cylindrically shaped dual-flow filter assembly 10 secured to an oil filter adapter standpipe 12. The filter assembly 10 is comprised of a filter housing 14, a spring 16, a filter cap 18, a collar 20, a bypass-flow or first filter element 22 having a first filter media support 24, a full-flow or second filter element 26 having a second filter media support 28, and a center-tube sealing grommet 30. Fluid to be filtered enters the filter assembly 10 through a plurality of fluid entry apertures 32 located in the filter cap 18 and travels between the filter housing 14 and the first and second filter elements 22 & 26. A first portion of the fluid passes through the first filter element 22 and follows a flow path generally shown by the arrow designated by reference numeral 34 while the remaining portion of the fluid passes through the second filter element 26 and follows a flow path generally shown by the arrow designated by reference numeral 36. Because of the differing filtering characteristics of the first and second filter elements 22 & 26, the grommet 30 is incorporated into the filter assembly 10 to prevent the fluid exiting the first and second filter elements 22 & 26 from commingling.

Referring to Figures 1 and 2, the grommet 30 is substantially tube shaped, having a generally cylindrical body 38, first and second ends 40 & 42, a sealing flange 44, first and second annular lands 46 & 48, and first and second filter media support channels 50 & 52. Preferably, the grommet 30 is an item molded from a conventional, resilient resinous material such as polypropylene which is sufficiently soft to provide adequate sealing yet rigid enough to resist deformation resulting from differential fluid pressures and fluctuations in fluid pressure. The sealing flange 44 and the first and second annular lands 46 & 48 extend radially outward from the body 38. The first and second annular lands 46 & 48 terminate relatively close to the body 38, while the sealing flange 44 extends radially significantly further. The sealing flange 44 cooperates with the first and second annular lands 46 & 48 to form the respective edges of the first and second filter media support channels 50 & 52. On the sides of the first and second annular lands 46 & 48 opposite their respective filter media channel 50 & 52, a pair of fillets 54 are used to make the transition from the annular lands 46 & 48 to the grommet body 38.

Figure 3 is an enlarged view of a portion of the area where the first and second filter elements 22 & 26 are joined to the grommet 30. The first and second filter media supports 24 & 28 are received into the first and second filter media support channels 50 & 52, respectively and retained by the corresponding first and second annular lands 46 & 48, respectively. The fillets 54 provide additional support to their corresponding lands 46 & 48 so that the filter elements 22 & 26 are more rigidly retained. Additionally, the fillets 54 facilitate the installation of the filter elements 22 & 26 over the respective lands 46 & 48 by providing a smooth transition from the grommet body 38 to the lands 46 & 48.

The cooperation between the grommet 30 and the first and second filter elements 22 & 26 allows these components to be joined together in a significantly stronger fashion. This permits the filter elements 22 & 26 to be subassembled to the grommet 30 prior to their installation into the filter housing 14 on equipment designed to adjust to a range of different filter sizes which supports several different dual-flow filter assembly lines. Subassembly of the filter elements 22 & 26 to the grommet 30 in this "off-line" manner allows for more effective utilization of the equipment used to assemble these components.

This "off-line" subassembly operation is particularly advantageous for a filter assembly manufacturer having several dual-flow filter assembly lines. A single subassembly area for these components eliminates the need to equip each dual-flow filter assembly line with equipment that will feed and assemble the filter elements 22 & 26 and the grommet 30. Also advantageously, installation of the subassembled filter elements 22 & 26 and grommet 30 takes place in one station on a dual-flow filter assembly line, allowing a manufacturer to remove several stations from the assembly line, increasing through-put of the assembly line and reducing the cycle time of the manufacturing process.

The relatively strong connection created by the grommet 30 also eliminates the tendency of the grommet 30 to push out from the filter elements 22 & 26, thereby maintaining the axis of the filter elements 22 & 26 in relation to the axis of the filter housing 14, improving the assembly characteristics of the filter assembly by significantly reducing the risk that components will be assembled while misaligned.

The foregoing discussion discloses and describes a preferred embodiment of the present invention. One skilled in the art will readily recognize from such discussion, and from the accompanying drawings and claims, that various changes, modifications and variations can be made therein without departing from the scope of the invention as defined in the following claims.

## Claims

1. A sealing grommet (30) for a dual-flow fluid filter assembly, said grommet for use in separating a first fluid flow from a first filter element and a second fluid flow from a second filter element, wherein said first filter element is stacked on said second filter element, said grommet comprising:
a substantially tubular body portion (38) having first and second ends;
an interior annular flange forming a seal adapted to provide sealing engagement with a standpipe received within the filter assembly;
an exterior flange (44) extending outward from said body portion and adapted to separate said filter elements and axially positioning said grommet between said first and second filter elements;
a land (46) extending outward from said body portion adapted to further secure said first or second filter element to said grommet; and
a channel (50, 52), disposed between said exterior flange and said land adapted to receive said first or second filter element.

2. The grommet of Claim 1, further comprised of an additional land and an additional channel wherein both said first and second filter elements are adapted to be retained to said grommet.

3. The grommet of Claim 1, further comprised of a fillet (54), located adjacent to said land and opposite said channel.

4. The grommet of Claim 1, wherein the grommet is made of a resilient resinous material.

5. The grommet of Claim 1, wherein the grommet is made of polypropylene.

6. A dual-flow fluid filter assembly comprising:
a filter housing (14);
a first filter element (22);
a second filter element (26); and
a grommet (30) disposed within said first and second filter elements, said grommet having a tubular body (38) for isolating a first fluid flow from said first filter element and a second fluid flow from said second filter element, said body further including an external flange (44) received between said first and second filter elements, a land extending outward from said body and separated from said flange by a channel (50) formed into said body, in which channel said first or second filter element is received, and an internal annular flange adapted to be sealingly engaged with the upper portion of a standpipe.

7. The dual-flow fluid filter assembly of Claim 6, wherein said grommet further includes a fillet (54) located adjacent to said land and opposite said channel.

8. The dual-flow fluid filter assembly of Claim 6, wherein the grommet is further comprised of a resilient resinous material.

9. The dual-flow fluid filter assembly of Claim 6, wherein the grommet is further comprised of polypropylene.

10. The dual-flow fluid filter assembly of claim 6, wherein the first and second filter elements are defined as being full-flow and bypass flow filter elements.

## Patentansprüche

1. Dichtungstülle (30) für eine Zweistromfluidfilteranordnung, wobei die Tülle zum Trennen eines ersten Fluidstroms vom einem ersten Filterelement und eines zweiten Fluidstroms von einem zweiten Filterelement verwendet wird, wobei das erste Filterelement auf dem zweiten Filterelement gestapelt ist und die Tülle Folgendes umfasst:
einen im Wesentlichen röhrenförmigen Körperteil (38) mit einem ersten und einem zweiten Ende;
einen ringförmigen Innenflansch, der eine Dichtung bildet, die zur Bereitstellung eines Dichtungseingriffs mit einem in der Filteranordnung aufgenommenen Standrohr ausgeführt ist;
einen Außenflansch (44), der sich vom Körperteil nach außen erstreckt und zur Trennung der Filterelemente und axialen Positionierung der Tülle zwischen dem ersten und dem zweiten Filterelement ausgeführt ist;
einen Steg (46), der sich von dem Körperteil nach außen erstreckt und zur weiteren Befestigung des ersten oder zweiten Filterelements an der Tülle ausgeführt ist; und
einen Kanal (50, 52), der zwischen dem Außenflansch und dem Steg angeordnet und zur Aufnahme des ersten oder zweiten Filterelements ausgeführt ist.

2. Tülle nach Anspruch 1, die weiterhin aus einem zusätzlichen Steg und einem zusätzlichen Kanal besteht, wobei sowohl das erste als auch das zweite Filterelement zum Festhalten an der Tülle ausgeführt sind.

3. Tülle nach Anspruch 1, die weiterhin aus einer Auskehlung (54) besteht, die sich neben dem Steg und gegenüber dem Kanal befindet.

4. Tülle nach Anspruch 1, die aus einem elastischen Harzmaterial besteht.

5. Tülle nach Anspruch 1, die aus Polypropylen besteht.

6. Zweistromfluidfilteranordnung, die Folgendes umfasst:
ein Filtergehäuse (14);
ein erstes Filterelement (22);
ein zweites Filterelement (26); und
eine Tülle (30), die innerhalb des ersten und zweiten Filterelements angeordnet ist, wobei die Tülle eine röhrenförmigen Körper (38) aufweist, um einen ersten Fluidstrom vom ersten Filterelement und einen zweiten Fluidstrom vom zweiten Filterelement zu trennen, wobei der Körper weiterhin einen zwischen dem ersten und zweiten Filterelement aufgenommenen Außenflansch (44), einen sich vom Körper nach außen erstreckenden und durch einen im Körper ausgebildeten Kanal (50), in welchem das erste oder das zweite Filterelement aufgenommen wird, von dem Flansch getrennten Steg und einen ringförmigen Innenflansch, der zum abdichtenden Eingriff mit dem oberen Teil eines Standrohrs ausgeführt ist, enthält.

7. Zweistromfluidfilteranordnung nach Anspruch 6, bei der die Tülle weiterhin eine Auskehlung (54) aufweist, die sich neben dem Steg und gegenüber dem Kanal befindet.

8. Zweistromfluidfilteranordnung nach Anspruch 6, bei der die Tülle weiterhin aus einem elastischen Harzmaterial besteht.

9. Zweistromfluidfilteranordnung nach Anspruch 6, bei der die Tülle weiterhin aus Polypropylen besteht.

10. Zweistromfluidfilteranordnung nach Anspruch 6, bei dem das erste und das zweite Filterelement als Haupt- und Nebenstromfilterelemente definiert sind.

## Revendications

1. Anneau d'étanchéité (30) pour ensemble de filtre de fluide à double flux, ledit anneau servant à séparer un premier flux de fluide provenant d'un premier élément de filtre et un deuxième flux de fluide provenant d'un deuxième élément de filtre, dans lequel ledit premier élément de filtre est empilé sur ledit deuxième élément de filtre, ledit anneau comprenant :
une portion de corps substantiellement tubulaire (38) ayant des première et deuxième extrémités ;
une bride annulaire intérieure formant un joint prévu pour fournir un engagement hermétique avec un tuyau de montée reçu à l'intérieur de l'ensemble de filtre ;
une bride extérieure (44) s'étendant vers l'extérieur depuis ladite portion de corps et prévue pour séparer lesdits éléments de filtre et pour positionner axialement ledit anneau entre ledit premier et ledit deuxième éléments de filtre ;
un méplat (46) s'étendant vers l'extérieur depuis ladite portion de corps, prévu pour fixer en outre ledit premier ou deuxième élément de filtre audit anneau ; et
un canal (50, 52) disposé entre ladite bride extérieure et ledit méplat, prévu pour recevoir ledit premier ou deuxième élément de filtre.

2. Anneau selon la revendication 1, comprenant en outre un méplat supplémentaire et un canal supplémentaire, les deux dits premier et deuxième éléments de filtre étant prévus pour être retenus sur ledit anneau.

3. Anneau selon la revendication 1, comprenant en outre un congé (54) situé à proximité dudit méplat et à l'opposé dudit canal.

4. Anneau selon la revendication 1, l'anneau étant fabriqué en un matériau résineux souple.

5. Anneau selon la revendication 1, l'anneau étant fabriqué en polypropylène.

6. Ensemble de filtre de fluide à double flux, comprenant :
un boîtier de filtre (14) ;
un premier élément de filtre (22) ;
un deuxième élément de filtre (26) ; et
un anneau (30) disposé dans lesdits premier et deuxième éléments de filtre, ledit anneau ayant un corps tubulaire (38), destiné à isoler un premier flux de fluide provenant dudit premier élément de filtre et un deuxième flux de fluide provenant dudit deuxième élément de filtre, ledit corps comportant en outre une bride extérieure (44) reçue entre lesdits premier et deuxième éléments de filtre, un méplat s'étendant vers l'extérieur depuis ledit corps et étant séparé de ladite bride par un canal (50) formé dans ledit corps, dans lequel canal ledit premier ou deuxième élément de filtre est reçu, et une bride annulaire intérieure prévue pour s'engager hermétiquement avec la portion supérieure d'un tuyau de montée.

7. Ensemble de filtre de fluide à double flux selon la revendication 6, dans lequel ledit anneau comporte en outre un congé (54) situé à proximité dudit méplat et à l'opposé dudit canal.

8. Ensemble de filtre de fluide à double flux selon la revendication 6, dans lequel l'anneau se compose en outre d'un matériau résineux souple.

9. Ensemble de filtre de fluide à double flux selon la revendication 6, dans lequel l'anneau se compose en outre de polypropylène.

10. Ensemble de filtre de fluide à double flux selon la revendication 6, dans lequel les premier et deuxième éléments de filtre sont définis comme étant des éléments de filtre à flux total et à flux de dérivation.
